# EUROPEAN PATENT APPLICATION

(11) **EP 3 496 286 A1**
(43) Date of publication of application: **12.06.2019**
(21) Application number: 17836846.0
(22) Date of filing: 27.07.2017
(51) Int. Cl.: H04B 3/54, G08C 19/00, H02J 13/00, H04M 11/00, H04Q 9/00

(54) **COMMUNICATION DEVICE AND COMMUNICATION SYSTEM**

(30) Priority: 05.08.2016 JP 2016155094
(71) Applicant: Panasonic Intellectual Property Management Co., Ltd., Osaka-shi, Osaka 540-6207 (JP)
(72) Inventor: NAKANO Shinichi, Osaka 540-6207 (JP); MAEDA Kazunari, Osaka 540-6207 (JP); MATSUDA Takehiro, Osaka 540-6207 (JP); KOYAMA Masaki, Osaka 540-6207 (JP); TARUMI Kosuke, Osaka 540-6207 (JP); TAKAHASHI Eiji, Osaka 540-6207 (JP)
(74) Representative: Müller-Boré & Partner Patentanwälte PartG mbB
(86) International application number: PCT/JP2017/027200
(87) International publication number: WO 2018/025740

(57) **Abstract**

A communication device that enables presentation of a state of communication failure caused by noise and the like, and a communication system are provided. A communication device (1) includes a device body (100) to be installed in premises. The device body (100) includes a first communication unit (101) and a display unit (107). The first communication unit (101) is allowed to be connected to any of outlets provided in the premises and configured to perform power-line communication whose transmission line is a power line. The display unit (107) is configured to, based on a communication state of the first communication unit (101), display installation information indicating whether or not the device body (100) is installed at an appropriate installation location in the premises.

## Description

### Technical Field

The invention relates generally to communication devices and communication systems and, more particularly, to a communication device configured to perform power-line communication whose transmission line is a power line, and a communication system with the same.

### Background Art

There has been proposed a power measuring system including an electricity meter installed outdoors, an electric power information processor installed indoors, and electrically powered devices (e.g., Patent Document 1). In Patent Document 1, each of the electricity meter and the electrically powered devices is equipped with an information communication means for communicating with the electric power information processor. Patent Document 1 describes a configuration in which the electricity meter is provided with, as its own information communication means, a power-line communication (PLC) terminal for wired communication.

In the abovementioned electric power information processor, a communication device thereof performs power-line communication (PLC) with the electricity meter. However, an installation location thereof causes concern that attenuation occurs in signals between the communication device and a communication destination (electricity meter), and the communication device is susceptible to noise and the like emitted onto a power line from ambient electrically powered devices. Thus, the installation location of the communication device may cause communication failure.

### Citation List

### Patent Literature

Patent Document 1: WO2011/067988 A1

### Summary of Invention

The present invention has been achieved in view of the above circumstances, and an object thereof is to provide a communication device that enables presentation of a state of communication failure caused by noise and the like, and a communication system.

A communication device according to an aspect of the present invention includes a device body to be installed in premises. The device body includes a communication unit and a display unit. The communication unit is allowed to be connected to any of outlets provided in the premises and configured to perform power-line communication whose transmission line is a power line. The display unit is configured to, based on a communication state of the communication unit, display installation information indicating whether or not the device body is installed at an appropriate installation location in the premises.

A communication system according to an aspect of the present invention includes, as the communication device, a first communication device. The communication system also includes a second communication device configured to communicate with the first communication device. As the communication unit, a first communication unit is provided. The first communication device is configured to communicate with the second communication device through a second communication unit different from the first communication unit.

### Brief Description of Drawings

FIG. 1 is a block diagram of a configuration of a communication system equipped with a communication device according to an embodiment of the present invention;
FIG. 2 is a view illustrating the configuration of the communication system;
FIG. 3A is a view illustrating a display example of the communication device;
FIG. 3B is a view illustrating a display example of the communication device;
FIG. 3C is a view illustrating a display example of the communication device;
FIG. 3D is a view illustrating a display example of the communication device;
FIG. 4A is a view illustrating a state of the communication device before it is relocated;
FIG. 4B is a view illustrating a state of the communication device after it is relocated; and
FIG. 5 is a view illustrating how the communication device switches between forms of modulation.

### Description of Embodiments

### (1) Schema

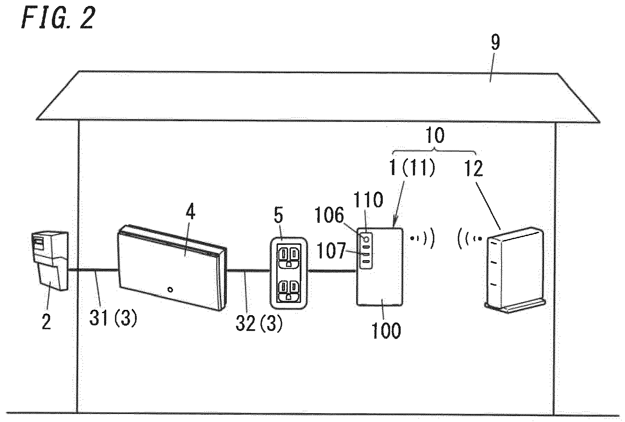

As shown in FIG. 2, a communication device 1 according to the present embodiment includes a device body 100 to be installed in premises 9. The communication device 1 is configured to perform power-line communication (PLC), whose transmission line is a power line 3, with a communication terminal 2. The premises 9 stated herein are, for example, a building to receive electricity supplied from an electric utility, or the like. Hereinafter, although a detached house is exemplified as the premises 9, the premises 9 are not limited to the detached house, but examples thereof may further include each flat of an apartment block, business premises, a store and the like.

In the present embodiment, a smart meter installed in the premises 9 is explained and exemplified as the communication terminal 2. The smart meter (communication terminal 2) is connected to a utility grid or energy supply company via a service line or connection, and also connected to a distribution board 4 via power conductors 31 constituting an entrance cable. Outlets 5 are provided in the premises 9, and the distribution board 4 is connected thereto via power conductors 32 forming branch circuits. When the power conductors 31 and the power conductors 32 are not distinguished from each other in particular, the power conductors 31 and the power conductors 32 are called the "power line 3".

Thus, the communication terminal 2 for the smart meter is electrically connected to the outlets 5 provided in the premises 9, via the power line 3 (interior wiring) provided in the premises 9. When the communication device 1 is therefore connected to an outlet 5 in the premises 9, it is electrically connected to the communication terminal 2 via the power line 3. This enables the communication device 1 to perform power-line communication with the communication terminal 2 that possesses a function of power-line communication. Thus, the communication terminal 2 for the smart meter will transmit, for example meter reading information on a measurement value of electric energy consumption in the premises 9 to the communication device 1 by the power-line communication.

In general, the premises 9 such as a detached house are provided therein with the outlets 5 each of which is electrically connected to the communication terminal 2 (smart meter) via the power line 3. Accordingly, even if the communication device 1 is connected to any outlet 5 thereof provided in the premises 9, it is electrically connected to the communication terminal 2 via the power line 3. However, the installation location of the communication device 1 to perform power-line communication with the communication terminal 2 may cause communication failure owing to various factors such as, for example, attenuation occurring in signals between the communication device 1 and the communication terminal 2, and conductive noise emitted on the power line 3 from electrically powered devices.

Here, even if the communication device 1 is simply installed near to the communication terminal 2, a fine communication state is not necessarily secured between the communication device 1 and the communication terminal 2. For example, even if the communication device 1 is physically brought closer to the communication terminal 2, a communication state therebetween may be degraded when signal attenuation increases as a result of line length of the power line 3 between the communication device 1 and the communication terminal 2 becoming long, or when the communication device 1 is susceptible to noise from electrically powered devices. In contrast, even if the communication device 1 is physically moved away from the communication terminal 2, a fine communication state may be obtained when signal attenuation therebetween decreases as a result of the line length of the power line 3 between the communication device 1 and the communication terminal 2 becoming short, or when the communication device 1 is less susceptible to noise from electrically powered devices.

If the communication device 1 is relocated, communication failure between the communication device 1 and the communication terminal 2 may be eliminated. However, how to install the communication device 1 at an appropriate installation location depends on various factors and is therefore not determined unconditionally. Therefore, the communication device 1 according to the present embodiment possesses a function of indicating whether or not the communication device 1 is installed at an appropriate installation location in the premises 9. It is therefore possible to show a user the necessity of relocating the communication device 1.

### (2) Details

The communication device 1 according to the present embodiment will hereinafter be explained in detail.

### (2.1) Overall structure

As shown in FIG. 2, the present embodiment exemplifies a communication system 10 including a first communication device 11 and a second communication device 12, in which the first communication device 11 is provided as the communication device 1. That is, the first communication device 11 as the communication device 1 constitutes the communication system 10 along with the second communication device 12. The first communication device 11 is provided as the communication device 1, and therefore to perform power-line communication with the communication terminal 2 as stated above. In contrast, the second communication device 12 is configured to communicate with the first communication device 11. Thus, although the communication terminal 2 and the second communication device 12 do not possess their respective functions configured to directly communicate with each other, they are able to exchange information through the first communication device 11. In other words, the communication device 1 (first communication device 11) is provided between the communication terminal 2 and the second communication device 12, and functions as an adapter configured to transmit (relay) the information exchanged between the communication terminal 2 and the second communication device 12.

It is assumed that a form of communication between the first communication device 11 and the second communication device 12 relates to wireless communication whose medium is radio waves. In short, the first communication device 11 as the adapter intervenes between the communication terminal 2 compliant with the power-line communication and the second communication device 12 compliant with the wireless communication, thereby enabling information exchange between the communication terminal 2 and the second communication device 12 compliant with their respective different forms of communication. The second communication device 12 is therefore able to exchange information with the communication terminal 2 as a result of combination with the first communication device 11 even when it is impossible for the second communication device 12 to directly communicate with the communication terminal 2 because of the different forms of communication. Note that the form of communication between the first and second communication devices 11 and 12 is not limited thereto, but other examples thereof may include power-line communication like the communication between the first communication device 11 and the communication terminal 2, wired communication, optical communication and the like.

In the present embodiment, the communication terminal 2 is the smart meter installed in the premises 9 as stated above. The second communication device 12 to be explained is a home energy management system (HEMS) controller. The smart meter (communication terminal 2) is installed outdoors with the smart meter fixed on an exterior wall or the like of the premises 9, and possesses a function as an electric energy meter (electricity meter) configured to measure electric energy consumption in the premises 9. The smart meter (communication terminal 2) may transmit a signal containing meter reading information on a measurement value of electric energy consumption at regular intervals (e.g., of 30 minutes). The HEMS controller (second communication device 12) is installed in the premises 9 and configured to receive, through the first communication device 11, the meter reading information transmitted from the communication terminal 2. The HEMS controller (second communication device 12) possesses a function of communicating with one or more electrically powered devices (compliant with HEMS) in the premises 9, such as, for example, (an) air conditioners, (a) lighting fixtures and (a) television sets. The HEMS controller (second communication device 12) may cause a monitor in the premises 9 to display the meter reading information of the communication terminal 2, and control the one or more electrically powered devices based on the meter reading information.

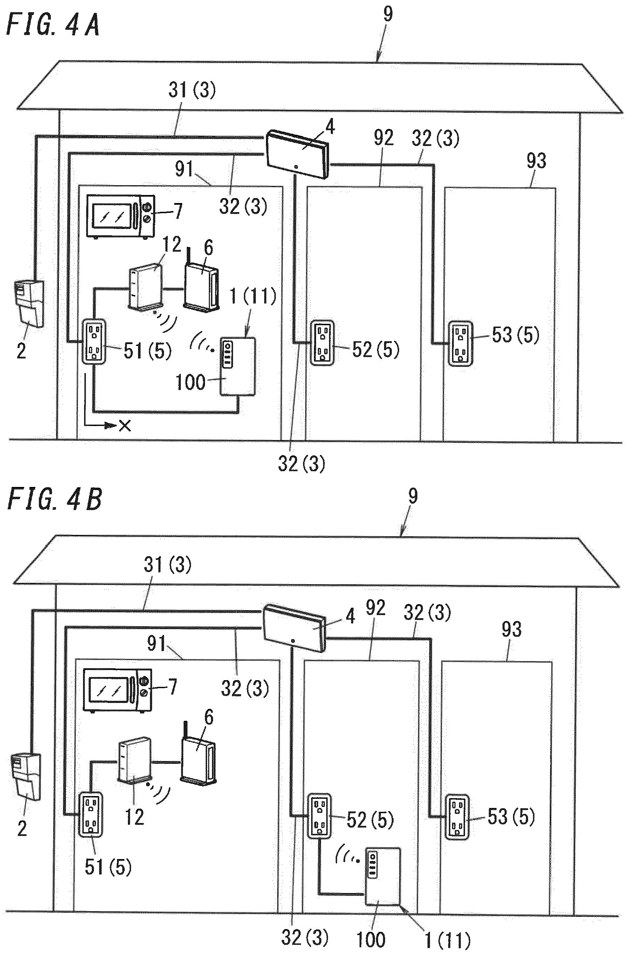

That is, a communication path between the communication terminal 2 and either the first communication device 11 or the second communication device 12 is included in a communication route (what is called B-route) at the indoor side of the smart meter. Here, the second communication device 12 may be connected to the Internet via a network device such as a router 6 (see FIG. 4A). The second communication device 12 being connected to the Internet enables transmission of the meter reading information from the communication terminal 2 to a server, a cloud (cloud computing) service or the like on the Internet via the B-route.

### (2.2) Configuration of communication device

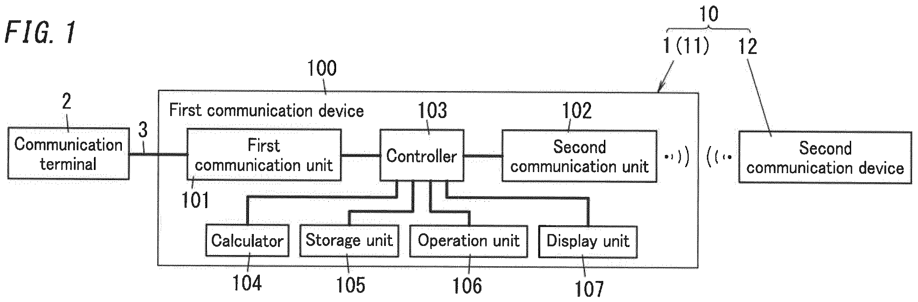

A configuration of the communication device 1 (first communication device 11) will hereinafter be explained in detail with reference to FIG. 1.

The communication device 1 includes the device body 100 to be installed in the premises 9. The device body 100 is allowed to be connected to any of the outlets 5 provided in the premises 9 (see FIG. 2). The device body 100 is activated by electric power supplied from the outlet 5. The device body 100 possesses a first communication unit 101, a second communication unit 102, a controller 103, a calculator 104, a storage unit 105, an operation unit 106 and a display unit 107. The controller 103, the calculator 104 and the storage unit 105 may be packaged in a chip.

The first communication unit 101 is a communication module configured so that the communication device 1 performs power-line communication with the communication terminal 2. That is, the first communication unit 101 is connected to any of the outlets 5 provided in the premises 9 (see FIG. 2) and the communication device 1 is to perform the power-line communication with the communication terminal 2 through the power line 3 as the transmission line. In the present embodiment, a form of the power-line communication of the first communication unit 101 is compliant with G3-PLC (see international telecommunication union telecommunication standardization sector (ITU-T) G. 9903). In the G3-PLC, a communication frequency band is a kHz band and a form of modulation is compliant with orthogonal frequency division multiplexing (OFDM). Although G3-PLC provides a transmission rate faster than that provided by power-line communication compliant with, for example a spread spectrum (SS) as a form of modulation, it provides low noise immunity. The first communication unit 101 possesses modulation and demodulation functions configured so that the communication device 1 performs two way data transmission with respect to the communication terminal 2.

The second communication unit 102 is a communication module configured so that the first communication device 11 performs wireless communication with the second communication device 12. In the present embodiment, a form of the wireless communication of the second communication unit 102 is compliant with low power radio (specified low power radio) without requiring a license. In this type of low power radio, specifications such as the frequency band and antenna power determined according to the application are prescribed in each country. In Japan, 920 MHz and 420 MHz radio frequency bands are designated for low-power radio. The communication between the second communication unit 102 and the second communication device 12 is compliant with Wi-SUN (registered trademark), but may be one of other forms. The second communication unit 102 possesses modulation and demodulation functions, and is configured so that the first communication device 11 performs two way data transmission with respect to the second communication device 12.

The controller 103 is configured to control the first and second communication units 101 and 102, the calculator 104 and the display unit 107. Herein, the controller 103 is mainly composed of a microcomputer including a processor and a memory. The processor of the microcomputer executes a program stored in the memory, and thereby the microcomputer functions as the controller 103.

The calculator 104 is configured to calculate an evaluation value representing a signal-to-noise (SN) ratio of the first communication unit 101. The storage unit 105 is configured to store at least log information on power-line communication by the first communication unit 101. The calculator 104 and the storage unit 105 are basically employed for determination of a communication state of the first communication unit 101. Respective functions of the calculator 104 and the storage unit 105 will be explained in detail in "(2.4) Determination process of communication state".

The operation unit 106 is configured to receive user's operation. In the present embodiment, the operation unit 106 is a button switch configured to switch between ON and OFF according to user's press operation. Specifically, the operation unit 106 is a momentary push switch configured to be turned on during the press operation and be turned off other than during the press operation. The operation unit 106 is disposed behind a display area 110 provided on a front surface of the device body 100 (see FIG. 2).

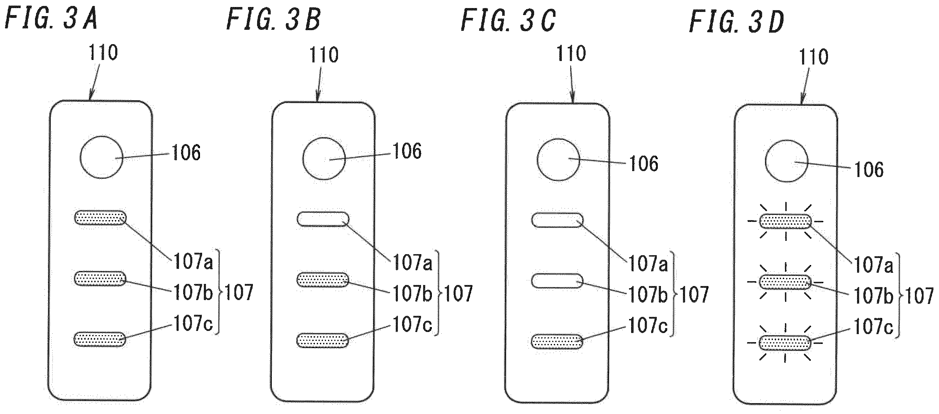

The display unit 107 is disposed below the operation unit 106 in the display area 110 provided on the front surface of the device body 100 (see FIG. 2). The display unit 107 includes light emitting units and is configured to perform display according to a light emitting state of the light emitting units. Herein, examples of the light emitting state include respective lighting states, respective non-lighting states and respective blinking patterns (blinking periods), respective luminous colors and the like of the light emitting units. In the present embodiment, the display unit 107 possesses thee light emitting units (first light emitting unit 107a, second light emitting unit 107b and third light emitting unit 107c) arranged in a vertical direction in the display area 110 (see FIGS. 3A to 3D). Each of the first light emitting unit 107a, the second light emitting unit 107b and the third light emitting unit 107c is a light source including a light emitting diode (LED). The first light emitting unit 107a, the second light emitting unit 107b and the third light emitting unit 107c may be the same or different in luminous color.

In the present embodiment, the first light emitting unit 107a possesses an indicator function for operation check of the first communication unit 101. The second light emitting unit 107b possesses an indicator function for operation check of the second communication unit 102. Each of the first and second light emitting units 107a and 107b is configured to display information according to its own light emitting state, such as, for example, disconnection (not set), completion of connection (set completion), during communication, or connection abnormality. The third light emitting unit 107c possesses an indicator function for state check of energization of the device body 100 and the like. The third light emitting unit 107c is configured to display information according to a light emitting state thereof, such as no energization, completion of an initialization process, during processor processing, or device failure. Note that arrangement and manner of the indicators for operation check and state check of energization are not limited to the abovementioned example. For example, the first light emitting unit 107a may function as the indicator for state check of energization, and the third light emitting unit 107c may function as the indicator for operation check of the first communication unit 101.

### (2.3) Display function of communication device

A display function of the communication device 1 (first communication device 11) will be explained in detail.

The device body 100 is configured to switch between operation modes including a normal mode and a test mode. The operation unit 106 receives a specific operation, thereby causing the device body 100 to switch between the operation modes. In the present embodiment, the device body 100 usually operates in the normal mode. When the operation unit 106 receives a tap operation or a short press operation in which it is tapped or pressed for a short time less than predetermined time (about three seconds), the operation unit 106 temporarily switches to the test mode. The test mode ends in a few seconds and is automatically switched to the normal mode.

As stated above, when the display unit 107 is in the normal mode, the first and second light emitting units 107a and 107b, and the third light emitting unit 107c function as indicators representing the operation states and the energization state of the first and second communication units 101 and 102 and the device body 100.

On the other hand, in the test mode, based on a communication state of the first communication unit 101, the display unit 107 displays installation information indicating whether or not the device body 100 is installed at an appropriate installation location in the premises 9. Thus, the display unit 107 is able to influence a user to relocate the communication device 1 when the device body 100 is installed at an inappropriate installation location in the premises 9, such as when there is communication failure between the communication device 1 and the communication terminal 2. The installation information displayed on the display unit 107 enables a user to know whether or not the device body 100 is installed at an appropriate installation location. When it is installed at an inappropriate installation location, the communication device 1 is relocated, thereby making it possible to eliminate the communication failure between the communication device 1 and the communication terminal 2.

In the present embodiment, the controller 103 is configured to determine whether or not the device body 100 is installed at an appropriate installation location in the premises 9. That is, based on the communication state of the first communication unit 101, the controller 103 will determine whether or not the device body 100 is installed at an appropriate installation location in the premises 9 to cause the display unit 107 to display a result of determination as installation information. In other words, the controller 103 determines whether or not the device body 100 is installed at an appropriate installation location in the premises 9, and then controls the display unit 107 according to the result of determination so that the display unit 107 displays the installation information.

As an example of the present embodiment, the communication state of the first communication unit 101 is to being basically represented by either "fine" or "poor". The display unit 107 varies the installation information displayed thereon according to the communication state represented by either the "fine" or the "poor". When the communication state is represented by "fine", the display unit 107 displays installation information indicating that the device body 100 is installed at an appropriate installation location in the premises 9. When the communication state is represented by "poor", the display unit 107 displays installation information indicating that the device body 100 is installed at an inappropriate installation location in the premises 9.

Here, in the test mode, the display unit 107 displays installation information and the operation unit 106 receives a specific operation, thereby causing the device body 100 to switch between the operation modes. In other words, the display unit 107 is configured to, when the operation unit 106 receives the specific operation as an trigger, start displaying the installation information. Since the test mode ends in a few seconds, the display of the installation information also ends in a few seconds. In other words, the display unit 107 is configured to start displaying the installation information and then end displaying the installation information when a predetermined period of time has elapsed since then.

The communication state of the first communication unit 101 is determined based on an evaluation value such as, for example, an SN ratio, a received signal strength indicator (RSSI), an error rate and a transmission rate of the first communication unit 101. That is, the communication state of the first communication unit 101 is represented by information derived from the evaluation value. In the present embodiment, the calculator 104 calculates an evaluation value representing an SN ratio of the first communication unit 101, and the controller 103 determines the communication state of the first communication unit 101 based on the evaluation value.

The communication device 1 is provided with a threshold for determining the communication state of the first communication unit 101. For example, the storage unit 105 stores the threshold. The controller 103 compares the evaluation value calculated by the calculator 104 with the threshold to determine the communication state according to a result of comparison. Specifically, when the evaluation value is equal to or greater than the threshold, the controller 103 determines that the communication state be represented by "fine". When the evaluation value is less than the threshold, the controller 103 determines that the communication state be represented by "poor". Based on the communication state of the first communication unit 101 determined in this way, the display unit 107 displays installation information indicating whether or not the device body 100 is installed at an appropriate installation location in the premises 9. In other words, according to a result of comparison between the threshold and the evaluation value, the display unit 107 performs display switching to indicate whether or not the device body 100 is installed at an appropriate installation location. A determination process of the communication state will be described in detail in "(2.4) Determination process of communication state".

In the present embodiment, the communication state of the first communication unit 101 further includes two states represented by "no signal" and "not connected". When there is no signal received by the first communication unit 101, the controller 103 determines that the communication state be represented by "no signal".

For example, when setting for communication, such as when pairing is not completed, the controller 103 determines that the communication state be represented by "not connected". When the communication state is represented by "no signal", the display unit 107 displays installation information indicating that the device body 100 is installed at an inappropriate installation location in the premises 9, like the communication state represented by the "poor".

Specific examples of display manners by the display unit 107 in the test mode will hereinafter be explained with reference to FIGS. 3A to 3D. In the first, second and third light emitting units 107a, 107b and 107c of FIGS. 3A to 3D, each outline represents a non-lighting state, each hatching (or dots) represents a lighting state, and each hatching (or dots) with radially extending lines represents a blinking state.

As shown in FIG. 3A, when the communication state is represented by the "fine", the display unit 107 is in a full lighting state in which all the first, second and third light emitting units 107a, 107b and 107c are lit. As shown in FIG. 3B, when the communication state is represented by the "poor", the display unit 107 is in a dual lighting state in which the second and third light emitting units 107b and 107c are lit with only the first light emitting unit 107a being unlit. As shown in FIG. 3C, when the communication state is represented by the "no signal", the display unit 107 is in a single lighting state in which only the third light emitting unit 107c is lit with the first and second light emitting units 107a and 107 being unlit. As shown in FIG. 3D, when the communication state is represented by the "not connected", the display unit 107 is in a full blinking state in which all the first, second and third light emitting units 107a, 107b and 107c are blinking.

That is, the display unit 107 being in the full lighting state as shown in FIG. 3A means that the display unit 107 displays installation information indicating that the device body 100 is installed at an appropriate installation location in the premises 9. On the other hand, the display unit 107 being in the dual lighting state as shown in FIG. 3B or in the single lighting state as shown in FIG. 3C means that the display unit 107 displays installation information indicating that the device body 100 is installed at an inappropriate installation location in the premises 9. In the latter case, the display unit 107 influences a user to relocate the communication device 1.

The display unit 107 may possess a function of displaying not only the installation information based on the communication state of the first communication unit 101 but also a communication state of the second communication unit 102. In this case, the display unit 107 may sequentially display the installation information based on the communication state of the first communication unit 101 and the communication state of the second communication unit 102 after the operation mode of the device body 100 is switched to the test mode.

User's act of relocating the communication device 1 according to the display of the display unit 107 will hereinafter be explained with reference to FIGS. 4A and 4B. FIGS. 4A and 4B exemplify a configuration in which there are rooms 91, 92 and 93 in the premises 9, and outlets 51, 52 and 53 are installed in the rooms 91, 92 and 93, respectively.

First, it is assumed that as an initial state the device body 100 is installed in the room 91 and connected to the outlet 51 in the room 91 as shown in FIG. 4A. An electrically powered device 7 that tends to generate noise such as, for example a microwave oven is disposed in the room 91 in which the device body 100 is installed. The communication device 1 therefore becomes susceptible to conductive noise emitted on the power line 3 from the electrically powered device 7. It is accordingly determined that the communication state of the first communication unit 101 be presented by the "poor". In this case, when the operation mode of the device body 100 is switched to the test mode, the display unit 107 is in the dual lighting state (see FIG. 3B). That is, the display unit 107 displays installation information indicating that the device body 100 is installed at an inappropriate installation location in the premises 9, thereby influencing a user to relocate the communication device 1.

FIG. 4B represents a state in which according to the display of the display unit 107 as stated above, the user has relocated the device body 100 to the room 92. In the example of FIG. 4B, the device body 100 is connected to the outlet 52 in the room 92. In this case, the communication device 1 is less susceptible to the conductive noise emitted on the power line 3 from the electrically powered device 7. It is accordingly determined that the communication state of the first communication unit 101 be represented by the "fine". In this case, when the operation mode of the device body 100 is switched to the test mode, the display unit 107 is in the full lighting state (see FIG. 3A). That is, the display unit 107 displays installation information indicating that the device body 100 is installed at an appropriate installation location in the premises 9.

### (2.4) Determination process of communication state

A determination process of the communication state of the first communication unit 101 in the communication device 1 (first communication device 11) will hereinafter be explained in detail.

As stated above, the controller 103 determines the communication state of the first communication unit 101 based on the evaluation value representing the SN ratio of the first communication unit 101 calculated by the calculator 104.

Specifically, the storage unit 105 stores at least the log information on the power-line communication through the first communication unit 101. The log information stated herein is information on, for example, an SN ratio, a received signal strength indicator, an error rate, a transmission rate and the like of the first communication unit 101. The log information is created by the first communication unit 101 or the controller 103 whenever the first communication unit 101 performs communication, and then stored in the storage unit 105. The storage unit 105 stores the log information created during a monitoring period, to which a timestamp (information representing the created time and the like) is assigned. Examples of the monitoring period stated herein include each of time intervals of day (24 hours), and a predetermined period of time (e.g., 30 minutes) between a current time and a time before the predetermined period of time.

The calculator 104 calculates an evaluation value from one or more factors contained in the log information stored in the storage unit 105. In the example of the present embodiment, the evaluation value is a value representing an SN ratio of the first communication unit 101. The calculator 104 calculates, as an evaluation value, a representative value (e.g., mean value, intermediate value or median) derived from one or more pieces of log information stored in the storage unit 105. That is, the calculator 104 calculates the evaluation value from cumulative data of the log information created during the monitoring periods. In the present embodiment, the SN ratio is calculated from a signal (containing noise components) received by the first communication unit 101. As a calculation method of the SN ratio, any of various methods may be applied. For examples, the SN ratio may be estimated from signal components obtained by removing noise components from a signal received by the first communication unit 101, or an error rate, a tone map and the like may be taken into consideration to calculate the SN ratio.

In the present embodiment, according to a trigger that is a specific operation received by the operation unit 106, the controller 103 causes the calculator 104 to calculate an evaluation value from one or more pieces of log information stored in the storage unit 105. Specifically, when the operation unit 106 receives an operation that is the same as an operation for switching the operation mode of the device body 100 from the normal mode to the test mode, the calculator 104 starts calculating the evaluation value. That is, when the operation unit 106 receives the short press operation in which it is tapped or pressed for a short time less than the predetermined time (about three seconds), the operation mode of the device body 100 is temporarily switched to the test mode, while the calculator 104 starts calculating the evaluation value.

Here, the calculator 104 may calculate the evaluation value based on a dummy signal for confirming network reachability, such as output of what is called ping. That is, when communication between the communication device 1 and the communication terminal 2 is performed, for example only once every 30 minutes, the first communication unit 101 mat transmit the dummy signal to the communication terminal 2 at a relatively high frequency, thereby calculating the evaluation value. Specifically, the first communication unit 101 receives an echo reply to the dummy signal from the communication terminal 2, thereby enabling calculation of an evaluation value representing an SN ratio, a received signal strength indicator, an error rate, a transmission rate, and the like.

Originally in order to switch between forms of modulation for the first communication unit 101, the calculator 104 calculates the evaluation value (SN ratio of first communication unit 101). That is, the controller 103 possesses a function of switching between the forms of modulation for the first communication unit 101 based on the evaluation value.

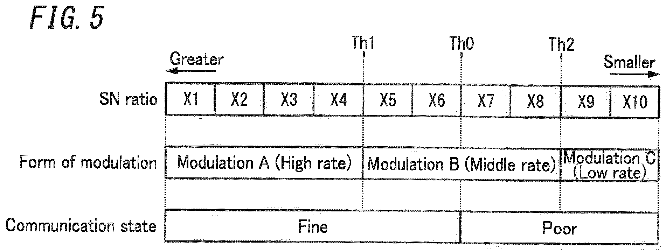

Specifically, as shown in FIG. 5, it is assumed that an evaluation value representing the SN ratio of the first communication unit 101 is calculated as any level of 10 levels from "X1" to "X10". In this case, switching between the forms of modulation for the first communication unit 101 is performed according to a result of comparison between the evaluation value (SN ratio) and modulation thresholds Th1 and Th2. In the example of FIG. 5, the modulation threshold Th1 is set between "X4" and "X5", while the modulation threshold Th2 (<Th1) is set between "X8" and "X9". Herein, respective values of evaluation values "X1" to "X10" decrease in order of "X1", "X2", "X3", ... (namely, respective SN ratios are more degraded).

In the example of FIG. 5, when the evaluation value is equal to or greater than the modulation threshold Th1, the controller 103 switches the form of modulation for the first communication unit 101 to "Modulation A". When the evaluation value is less than the modulation threshold Th1 and equal to or greater than the modulation threshold Th2, the controller 103 switches the form of modulation for the first communication unit 101 to "Modulation B". When the evaluation value is less than the modulation threshold Th2, the controller 103 switches the form of modulation for the first communication unit 101 to "Modulation C". Respective rates of the forms of modulation such as "Modulation A", "Modulation B" and "Modulation C" decrease in order of "Modulation A", "Modulation B" and "Modulation C".

In short, the communication device 1 according to the present embodiment is to determine the communication state based on the evaluation value for switching between the forms of modulation for the first communication unit 101. Here, the modulation thresholds Th1 and Th2 for switching between the forms of modulation and the threshold Th0 for determining the communication state are different from each other. That is, the controller 103 switches between the forms of modulation for the first communication unit 101 according to a result of comparison between the evaluation value, and the modulation thresholds Th1 and Th2 different from the threshold Th0 for determining the communication state of the first communication unit 101. In the example of FIG, 5, the threshold Th0 is set between "X6" and "X7". Therefore, when the evaluation value varies, for example from "X6" to "X7", the form of modulation for the first communication unit 101 is kept unchanged from "Modulation B", whereas a result of determination of the communication state varies from the "fine" to the "poor".

### (3) Modified examples

The communication device 1 according to the abovementioned embodiment, and the communication system 10 are merely one example of the present invention. The present invention is not limited to the abovementioned embodiment, but regardless of the configurations, various modifications are possible in light of general arrangement and the like and may be made without departing from the scope of technical ideas according to the present invention. Modified examples of the abovementioned embodiment will be listed below.

The communication system 10 is not limited to a configuration in which the first communication device 11 as the communication device 1 and the second communication device 12 include their respective separate housings, but the first and second communication devices 11 and 12 may be disposed in one housing. That is, the first and second communication devices 11 and 12 may be integrated physically, and configured to communicate with each other inside the one housing. In this case, the HEMS controller (first and second communication devices 11 and 12) performs power-line communication with the smart meter (communication terminal 2) directly not through any adapter.

The calculation method of the evaluation value (e.g., SN ratio of first communication unit 101) by the calculator 104 is not limited to the abovementioned methods. For example, the calculator 104 may transmit the dummy signal at a timing of the reception of the specific operation by the operation unit 106, and then calculate the evaluation value based on an echo reply to the dummy signal. In this case, the dummy signal may be transmitted two or more times for each operation to the operation unit 106. With this configuration, it is possible to calculate the evaluation value at an arbitrary timing and determine the communication state of the first communication unit 101.

The first communication device 11 is not limited to application for communication between the smart meter (communication terminal 2) and the HEMS controller (second communication device 12), but may be applied to various first communication devices 10.

The communication state of the first communication unit 101 may be determined based on an evaluation value representing a transmission rate of the first communication unit 101. That is, an evaluation value calculated by the calculator 104 is not limited to the SN ratio of the first communication unit 101, but may be the transmission rate of the first communication unit 101.

The controller 103 may switch between the forms of modulation for the first communication unit 101 according to a result of comparison between the threshold Th0 and the evaluation value. That is, the threshold value for switching between the forms of modulation may have the same value (Th0) as the threshold for determining the communication state.

The display unit 107 is not limited to the abovementioned configuration, but may possess, for example, one, two, four or more light emitting units. The display unit 107 may display the installation information by luminous colors of the light emitting unit. The display unit 107 may be, for example, a seven-segment LED, a liquid-crystal display or the like configured to display the installation information in the form of characters (texts).

In the abovementioned embodiment, "equal to or greater than" in a comparison between two values such as the evaluation value and thresholds means not only that the two values are equal but also that one of the two values is greater than the other. However, "equal to or greater than" may be, but not limited to this, synonymous with "greater than" only meaning that one of the two values is greater than the other. That is, whether to include the case where the two values are equal can be arbitrarily changed depending on the setting of the threshold values or the like. There is no technical difference between "equal to or greater than" and "greater than". Similarly, "equal to or less than" may be synonymous with "less than".

### (4) Advantages

As explained above, a communication device 1 according to a first aspect includes a device body 100 to be installed in premises 9. The device body 100 possesses a communication unit (first communication unit 101) and a display unit 107. The communication unit (first communication unit 101) is allowed to be connected to any of outlets 5 provided in the premises 9 and configured to perform power-line communication whose transmission line is a power line 3. The display unit 107 is configured to, based on a communication state of the communication unit (first communication unit 101), display installation information indicating whether or not the device body 100 is installed at an appropriate installation location in the premises 9.

With this configuration, based on the communication state of the communication unit (first communication unit 101) configured to perform the power-line communication, the display unit 107 is to display the installation information indicating whether or not the device body 100 is installed at an appropriate installation location in the premises 9. Even if communication failure occurs caused by various factors depending on an installation location of the communication device 1, the display unit 107 is able to show a user the necessity of relocating the communication device 1. The communication device 1 consequently enables the presentation of a state of communication failure caused by noise and the like. The communication device 1 accordingly makes it easy to secure fine communication, so that the communication failure of the communication device 1 is less likely to occur.

In a communication device 1 according to a second aspect turning on the first aspect, the communication state of the communication unit (first communication unit 101) is preferably information determined based on an evaluation value representing a signal-to-noise ratio of the communication unit (first communication unit 101). This configuration enables determination of the communication state of the communication unit (first communication unit 101) based on both attenuation occurring in signals between the communication device 1 and a communication destination (communication terminal 2) and noise emitted onto the power line 3 from ambient electrically powered devices. The power-line communication is susceptible to noise in particular. Determining the communication state based on not a received signal strength indicator but the SN ratio enables accurate determination of the communication state. However, this configuration is not essential for the communication device 1. The communication state of the communication unit (first communication unit 101) may be determined without the SN ratio.

In a communication device 1 according to a third aspect turning on the first aspect, the communication state of the communication unit (first communication unit 101) is preferably information determined based on an evaluation value representing a transmission rate of the communication unit (first communication unit 101). This configuration focuses on the transmission rate of the communication unit (first communication unit 101), thereby enabling determination of the communication state of the communication unit (first communication unit 101). However, this configuration is not essential for the communication device 1. The communication state of the communication unit (first communication unit 101) may be determined without the transmission rate.

A communication device 1 according to a fourth aspect turning on a second or third aspect is preferably provided with a threshold Th0 for determining the communication state of the communication unit (first communication unit 101). In this case, the display unit 107 is preferably configured to, according to a result of comparison between the threshold Th0 and the evaluation value, perform display switching to indicate whether or not the device body 100 is installed at the appropriate installation location. With this configuration, a relatively simple processing of only comparison between the threshold Th0 and the evaluation value enables the display switching, thereby indicating whether or not the device body 100 is installed at the appropriate installation location. However, this configuration is not essential for the communication device 1. The communication state of the communication unit (first communication unit 101) may be determined based on any of other conditions without the threshold Th0.

A communication device 1 according to a fifth aspect turning on the fourth aspect preferably further includes a controller 103 configured to switch between forms of modulation for the communication unit (first communication unit 101) according to a result of comparison between modulation thresholds Th1 and Th2 different from the threshold Th0 and the evaluation value. With this configuration, switching between the forms of modulation for the communication unit (first communication unit 101) is performed according to the evaluation value. It is accordingly possible to adopt a highly reliable form of modulation. Moreover, the evaluation value required for switching between the forms of modulation for the communication unit (first communication unit 101) can be utilized for determination of the communication state of the communication unit (first communication unit 101). It is accordingly possible to simplify the process of determination of the communication state of the communication unit (first communication unit 101). However, this configuration is not essential for the communication device 1. The controller 103 configured to switch between the forms of modulation for the communication unit (first communication unit 101) may be appropriately omitted.

A communication device 1 according to a sixth aspect turning on the fourth aspect preferably further includes a controller 103 configured to switch between forms of modulation for the communication unit (first communication unit 101) according to a result of comparison between the threshold TH0 and the evaluation value. With this configuration, switching between the forms of modulation for the communication unit (first communication unit 101) is performed according to the evaluation value. It is accordingly possible to adopt a highly reliable form of modulation. Moreover, the evaluation value required for switching between the forms of modulation for the communication unit (first communication unit 101) can be utilized for determination of the communication state of the communication unit (first communication unit 101). It is accordingly possible to simplify the process of determination of the communication state of the communication unit (first communication unit 101). However, this configuration is not essential for the communication device 1. The controller 103 configured to switch between the forms of modulation for the communication unit (first communication unit 101) may be appropriately omitted.

A communication device 1 according to a seventh aspect turning on any of the first to sixth aspects further includes an operation unit 106 configured to receive user's operation. In this case, the display unit 107 is preferably configured to, according to a trigger that is a specific operation received by the operation unit 106, start displaying the installation information. This configuration is able to show a user the installation information at an arbitrary timing, thereby enabling the user to check whether or not the device body 100 is installed at an appropriate installation location in the premises 9. However, this configuration is not essential for the communication device 1. The operation unit 106 may be appropriately omitted.

A communication device 1 according to an eighth aspect turning on any of the second to sixth aspects preferably further includes an operation unit 106, a storage unit 105 and a calculator 104. The operation unit 106 is configured to receive user's operation. The storage unit 105 is configured to store log information on the power-line communication by the communication unit (first communication unit 101). The calculator 104 is configured to calculate the evaluation value based on the log information. In this case, the calculator 104 is preferably configured to, according to a trigger that is a specific operation received by the operation unit 106, calculate the evaluation value based on one or more factors contained in the log information stored in the storage unit 105. With this configuration, the user is able to cause the communication device 1 to calculate the evaluation value at an arbitrary timing. However, this configuration is not essential for the communication device 1. The operation unit 106 may be appropriately omitted.

In a communication device 1 according to a ninth aspect turning on any of the first to eighth aspects, the display unit 107 is preferably configured to start displaying the installation information and then end displaying the installation information when a predetermined period of time has elapsed. With this configuration, the display unit 107 automatically ends displaying the installation information after the predetermined period of time. This therefore enables the display unit 107 to usually function as an indicator for checking operation and to stop display, thereby reducing power consumption. However, this configuration is not essential for the communication device 1. For example, until the operation unit 106 receives the specific operation, the display unit 107 may continue to display the installation information.

A communication system 10 according to a tenth aspect includes a first communication device 11 as a communication device 1 of any of the first to ninth aspects and a second communication device 12 configured to communicate with the first communication device 11. As the communication unit, a first communication unit 101 is provided. The first communication device 11 is configured to communicate with the second communication device 12 through a second communication unit 102 different from the first communication unit 101. With this configuration, it is possible to provide the communication system 10 that enables presentation of a state of communication failure caused by noise and the like. The communication system 10 accordingly makes it easy to secure fine communication, so that the communication failure of the communication system 10 is less likely to occur.

In a communication system 10 according to an eleventh aspect turning on the tenth aspect, the second communication unit 102 is preferably configured to perform wireless communication, whose medium is radio waves, with the second communication device 12. This configuration enables the first communication device 11 to exchange information with both the communication destination (communication terminal 2) compliant with the power-line communication and the second communication device 12 compliant with the wireless communication. However, this configuration is not essential for the communication system 10. The second communication unit 102 may be configured to communicate with the second communication device 12 by, for example, wired communication, optical communication or the like.

### Reference Signs List

- 1: Communication device
- 2: Communication terminal
- 3: Power line
- 31, 32: Power conductors
- 5, 51, 52, 53: Outlet
- 10: Communication system
- 11: First communication device
- 12: Second communication device
- 100: Device body
- 101: First communication unit (Communication unit)
- 102: Second communication unit
- 103: Controller
- 104: Calculator
- 105: Storage unit
- 106: Operation unit
- 107: Display unit
- Th0: Threshold
- Th1, Th2: Modulation threshold

## Claims

1. A communication device, comprising a device body to be installed in premises, wherein the device body comprises
a communication unit that is allowed to be connected to any of outlets provided in the premises and configured to perform power-line communication whose transmission line is a power line, and
a display unit configured to, based on a communication state of the communication unit, display installation information indicating whether or not the device body is installed at an appropriate installation location in the premises.

2. The communication device of claim 1, wherein the communication state of the communication unit is information determined based on an evaluation value representing a signal-to-noise ratio of the communication unit.

3. The communication device of claim 1, wherein the communication state of the communication unit is information determined based on an evaluation value representing a transmission rate of the communication unit.

4. The communication device of claim 2 or 3, provided with a threshold for determining the communication state of the communication unit, wherein
the display unit is configured to, according to a result of comparison between the threshold and the evaluation value, perform display switching to indicate whether or not the device body is installed at the appropriate installation location.

5. The communication device of claim 4, further comprising a controller configured to switch between forms of modulation for the communication unit according to a result of comparison between a modulation threshold different from the threshold and the evaluation value.

6. The communication device of claim 4, further comprising a controller configured to switch between forms of modulation for the communication unit according to a result of comparison between the threshold and the evaluation value.

7. The communication device of any one of claims 1 to 6, further comprising an operation unit configured to receive user's operation, wherein
the display unit is configured to, according to a trigger that is a specific operation received by the operation unit, start displaying the installation information.

8. The communication device of any one of claims 2 to 6, further comprising
an operation unit configured to receive user's operation,
a storage unit configured to store log information on the power-line communication by the communication unit, and
a calculator configured to calculate the evaluation value based on the log information, the calculator being configured to, according to a trigger that is a specific operation received by the operation unit, calculate the evaluation value based on one or more factors contained in the log information stored in the storage unit.

9. The communication device of any one of claims 1 to 8, wherein the display unit is configured to start displaying the installation information and then end displaying the installation information when a predetermined period of time has elapsed.

10. A communication system, comprising
a first communication device as a communication device of any one of claims 1 to 9, and
a second communication device configured to communicate with the first communication device, wherein
as the communication unit, a first communication unit is provided, and the first communication device is configured to communicate with the second communication device through a second communication unit different from the first communication unit.

11. A communication system of claim 10, wherein the second communication unit is configured to perform wireless communication, whose medium is radio waves, with the second communication device.
